# EUROPÄISCHE PATENTANMELDUNG

(11) **EP 0 625 543 A1**
(43) Veröffentlichungstag der Anmeldung: **23.11.1994**
(21) Anmeldenummer: 94106970.0
(22) Anmeldetag: 04.05.1994
(51) Int. Cl.: C08K 9/08, C08L 21/00, C08J 3/22

(54) **Verfahren zur Herstellung polymergebundener Kautschukchemikalien**

(30) Priorität: 17.05.1993 DE 4316429
(71) Anmelder: Rhein Chemie Rheinau GmbH, 68219 Mannheim (DE)
(72) Erfinder: Bauer, Armin, Dr., D-68782 Brühl (DE); Graf, Hans-Joachim, Dr., D-68219 Mannheim (DE); Hartmayer, Anton, D-68809 Neulussheim (DE); Kleinknecht, Harald, D-55232 Alzey (DE); Loix, Rene, Dr., D-69181 Leimen (DE); Relle, Arthur, D-68775 Ketsch (DE); Schäfer, Volker, Dr., D-67122 Altrip (DE)
(74) Vertreter: Gremm, Joachim, Dr.

(57) **Zusammenfassung**

Verfahren zur Herstellung polymergebundener Kautschukchemikalien, worin man die Kautschukchemikalien und gegebenenfalls Additive in einer niedermolekularen polymerisierbaren Flüssigkeit fein verteilt, dann gegebenenfalls nach Zugabe einer mit der polymerisierbaren Flüssigkeit unter Bildung des Polymeren reagierenden weiteren Komponente die Polymerenbildung auslöst und gegebenenfalls die gebildeten festen homogenen Gemische aus Kautschukchemikalie und Polymer in eine Gebrauchsform überführt.

## Beschreibung

Unter Kautschukchemikalien werden im folgenden Stoffe verstanden, die Kautschukmischungen zugesetzt werden, um ihre Vulkanisation zu ermöglichen, deren Verlauf zu steuern und um die Eigenschaften des Vulkanisats zu beeinflussen. Kautschukchemikalien sind meist Pulver, die sich nur schlecht homogen in die Kautschukmischungen einarbeiten lassen und die bei der Einarbeitung meist Staub verursachen. Man wendet Kautschukchemikalien daher oft in gebundener, nicht staubender Form an, um die Staubbelästigung zu vermeiden, das Einmischen zu beschleunigen und die Homogenität des Gemischs zu verbessern.

Als besonders günstig hat sich erwiesen, Kautschukchemikalien in an Kautschuk gebundener Form als sogenannte Master-batche zu verwenden. Als Bindemittel ist EPDM-Kautschuk, Ethylenvinylacetat-Copolymerisatkautschuk oder Mischungen aus beiden geeignet. Diese Master-batche, die häufig in granulierter Form vorliegen, enthalten neben Kautschukchemikalien und Kautschuk oft noch Weichmacher und Dispergierhilfsmittel.

Eine andere Art gebundener Kautschukchemikalien benutzt als Bindemittel Factis oder ähnliche Stoffe, z.B. mit Dicarbonsäuren vernetzte epoxidierte Triglyceride (deutsche Patentanmeldung P 39 20 411).

Zur Herstellung dieser Master-batche aus Kautschukchemikalien, evtl. Hilfsstoffen und den polymeren Bindern, ist Mischen in üblichen Mischaggregaten, z.B. Innenmischern, Extrudern oder Walzen erforderlich und anschließend Überführung in eine Gebrauchsform, z.B. Granulat. Die mechanischen Mischverfahren garantieren keine vollständige Homogenität, zumal die Kautschukchemikalien eine Neigung zur Reagglomeration haben.

Der Erfindung liegt die Erkenntnis zugrunde, daß man einfacher mit geringerem Energieaufwand und mit besserer Homogenität Kautschukchemikalien in polymergebundener Form herstellen kann, wenn man das Polymer in Gegenwart der bereits feinverteilten Kautschukchemikalien erzeugt.

Gegenstand der Erfindung ist somit ein Verfahren zur Herstellung polymergebundener Kautschukchemikalien, das dadurch gekennzeichnet ist, daß man die Kautschukchemikalien und gegebenenfalls Additive wie Weichmacher, in einer niedermolekularen polymerisierbaren Flüssigkeit fein verteilt, dann gegebenenfalls nach Zugabe einer mit der polymerisierbaren Flüssigkeit unter Bildung eines Polymeren reagierenden weiteren Komponente die Polymerbildung auslöst und gegebenenfalls das gebildete feste homogene Gemisch aus Kautschukchemikalien und Polymer in eine schüttfähige Form bringt.

Kautschukchemikalien im Sinne dieser Erfindung sind beispielsweise Vulkanisationsbeschleuniger, wie Tetramethylthiuramdisulfid (TMTD), Dibenzothiazyldisulfid (MBTS), N-cyclohexyl-2-benzothiazylsulfenamid (CBS), Zinkbenzyldithiocarbamat (ZBEC) u.a., Vernetzungsmittel, wie Schwefel (S), Dimorpholindisulfid (DTDM), Caprolactamdisulfid u.a., Aktivatoren, wie Zinkoxid, Magnesiumoxid, Bleioxide u.a. sowie weitere in Kautschukmischungen verwendete Zusätze, wie Verzögerer, Stabilisatoren, Alterungsschutzmittel, Füllstoffe, Verarbeitungswirkstoffe u.a..

Zur "in situ" Bildung der Binder für die Kautschukchemikalien existieren mehrere Möglichkeiten. Man kann z.B. Kautschukchemikalien in einem flüssigen Monomer wie Styrol verteilen und dann in üblicher Weise z.B. durch Katalysatoren oder thermisch die Polymerisation dieses Monomers auslösen. Hier ist jedes bekannte Polymerisationsverfahren anwendbar, vorausgesetzt, es geht von einem flüssigen Monomer aus und das erhaltene Polymerisat ist mit Kautschuk verträglich.

Eine andere Möglichkeit besteht darin, die Kautschukchemikalien in einer Flüssigkeit zu verteilen, die eine Komponente eines aus mindestens zwei Komponenten bestehenden polymerisationsfähigen Systems bildet um dann die zweite Komponente beizufügen.

Ein Beispiel hierfür ist, die Kautschukchemikalien in epoxidierten Fettsäuren oder Fettsäureestern wie Triglyceriden zu verteilen und dann mit einer mehrbasigen Säure, wie z.B. Dicarbonsäure oder Phosphorsäure bzw. Phosphorsäurepartialester, ein Polymer zu bilden. In den älteren deutschen Patentanmeldungen P 33 07 421 und P 42 31 073 sind solche Systeme näher beschrieben.

Nach dem gleichen Prinzip kann man auch die Kautschukchemikalie in Polyetherpolyol/Polyesterpolyol verteilen und mit mehrfunktionellem Isocyanat das Polymer erzeugen. Diese Systeme sind aus der Polyurethanchemie seit langem wohlbekannt.

### Beispiele

### Beispiel 1

48 Gew.-Teile MBTS (Mercaptobenzthiazyldisulfid)-Pulver werden mit einem Dissolver in ein Gemisch estehend aus 40 Gew.-Teile oxidiertes Sojaöl (Edenol D81, Henkel KGaA) und 8 Gew.-Teile eines Gemisches aus Thiocarbonsäure- und Carbonsäureestern (Vulkanol 81, Bayer AG) eingerührt.

In die erhaltene flüssige Masse werden gegebenenfalls unter Kühlen 5 Gew.-Teile Phosphorsäurepartialester (Additin C8/100, Rhein-Chemie) eingerührt, nach 10 Minuten wird ein weiteres Gew.-Teil Phosphorsäure (85%ig) zugegeben. Die Temperatur der Mischung steigt auf ca. 55° C. Nach ca. 5 Minuten entsteht ein polymeres, plastisches, zerkrümelbares produkt mit der Shore 0 Härte von 50 bis 60.

### Beispiel 2

50 Gew.-Teile Mahlschwefel-Pulver werden mit einem Dissolver in 48 Gew.-Teile epoxidiertes Sojaöl (Epoxidsauerstoff 6,0 - 6.3 % Edenol D 81, Henkel KGaA) homogen eingerührt.

In die vorliegende zähflüssige Masse werden gegebenenfalls unter Kühlen 2 Gew.-Teile Phosphorsäure (85%ig) eingerührt. Nach ca. 5 Minuten hat sich ein polymeres, plastisches, zerkrümelbares Produkt mit der Shore 0 Härte 50 bis 60 gebildet.

### Beispiel 3

51 Gew.-Teile MBTS (Mercaptobenzthiazyldisulfid)-Pulver werden mit einem Dissolver in ein Gemisch aus 23 Gew.-Teilen Ricinusöl (OHZ 165), 2 Gew.-Teilen Polyalkohol (OHZ 250, Desmodur TM, Bayer AG), 20 Gew.-Teile Dioctyladipinsäureester und 6 Gew.-Teilen Methylenbisdiphenyldiisocyanat eingerührt.

Nachdem eine homogene Mischung vorliegt, werden 0,06 Gew.-Teile Dibutylzinndiacetat zugesetzt. Nach 2 bis 4 Stunden wird ein polymeres, polastisches, zerkrümelbares Produkt erhalten. Die Shore 0 Härte beträgt 35 bis 45.

## Patentansprüche

1. Verfahren zur Herstellung polymergebundener Kautschukchemikalien, dadurch gekennzeichnet, daß man die Kautschukchemikalien und gegebenenfalls Additive in einer niedermolekularen polymerisierbaren Flüssigkeit fein verteilt, dann gegebenenfalls nach Zugabe einer mit der polymerisierbaren Flüssigkeit unter Bildung des Polymeren reagierenden weiteren Komponente die Polymerenbildung auslöst und gegebenenfalls die gebildeten festen homogenen Gemische aus Kautschukchemikalie und Polymer in eine Gebrauchsform überführt.
